# FASCICULE DE BREVET EUROPEEN

(11) **EP 2 791 432 B1**
(45) Date de publication et mention de la délivrance du brevet: **19.08.2020**
(21) Numéro de dépôt: 12790853.1
(22) Date de dépôt: 15.11.2012
(51) Int. Cl.: E04B 1/76, E04B 1/80, F16L 59/02

(54) **ISOLANT MULTICOUCHE**
MEHRSCHICHTENISOLATIONSMATERIAL
MULTILAYER INSULATOR

(30) Priorité: 06.12.2011 EP 11192172
(43) Date de publication de la demande: 22.10.2014
(73) Titulaire: Aluthermo AG, 4780 Saint Vith (BE)
(72) Inventeur: JAKOBS, Lambert, B-4783 Saint-Vith (BE)
(74) Mandataire: Pronovem
(86) Numéro de dépôt international: PCT/EP2012/072759
(87) Numéro de publication internationale: WO 2013/083382

(56) Documents cités:
- EP-A1- 1 321 594
- EP-A1- 1 626 133
- EP-B1- 0 718 447
- WO-A1-03/000494
- US-B1- 6 557 313

## Description

### Objet de l'invention

La présente invention se rapporte à un isolant multicouche comportant une couche isolante hautement compressible.

### Etat de la technique

Les isolants multicouches sont connus depuis de nombreuses années et ont connu une évolution constante. Ils comportent une série de couches dont chacune est susceptible de posséder une fonction propre. L'isolant comporte généralement sur ses faces extérieures un film réfléchissant de type aluminium, connu pour protéger l'habitation contre les échanges calorifiques de type rayonnement infrarouge. La partie isolante intrinsèque des isolants multicouches est souvent constituée de films à bulles d'air et parfois de mousses de polyéthylène.

Des exemples d'isolants multicouches sont divulgués dans le document EP 0 718 447 B1 et présentés aux figures 1 et 2 (isolant Aluthermo®) pour une application comme sous-toiture. Dans ce dernier cas, on observe que l'isolant doit être peu dense pour pouvoir être comprimé jusqu'à une épaisseur très faible par un contre lattage. D'autres exemples d'isolants multicouches sont connues des documents WO 03/000494 A1, US 6 557 313 B1, EP 1 626 133 A1 et EP 1 321 594 A1.

Les isolants de sous-toiture sont souvent utilisés en association avec un isolant minéral conventionnel du type laine de verre ou laine de roche placés entre les chevrons de la toiture. Il n'est cependant pas toujours possible de placer un tel isolant entre les chevrons, soit parce que l'espace disponible est trop limité, soit parce que les chevrons sont visibles. Il est alors nécessaire d'augmenter en conséquence les performances thermiques de l'isolant de sous-toiture. De manière plus générale, il peut être également intéressant d'augmenter la capacité d'isolation en disposant en sus de l'isolant conventionnel un isolant de sous-toiture plus performant thermiquement.

Le problème, c'est que les isolants minéraux conventionnels ne conviennent pas pour un complexe isolant de sous-toiture car ils sont trop denses pour pouvoir être comprimés jusqu'à une épaisseur très faible par un contre lattage.

### Buts de l'invention

La présente invention vise à surmonter les inconvénients de l'état technique en fournissant un nouvel isolant comportant une couche isolante hautement compressible.

Plus précisément, la présente invention vise à réaliser un isolant multicouche compressible jusqu'à environ 90 % par un contre lattage de toiture.

### Résumé de l'Invention

La présente invention se rapporte à un isolant multicouche selon la revendication 1 ci-jointe.

Selon des modes particuliers de l'invention, l'isolant comporte au moins une ou une combinaison appropriée des caractéristiques suivantes :
- la couche d'ouate a une masse volumique inférieure à 15 kg/m³, de préférence inférieure à 13 kg/m³ ;
- chaque film à bulles d'air est recouvert d'une feuille d'aluminium sur sa face libre ;
- la feuille d'aluminium comporte un revêtement de polyéthylène basse densité sur sa face en contact avec le film à bulles d'air et un revêtement de nitrocellulose ou de polyéthylène sur sa face libre ;
- il comporte en outre une membrane de collage entre chacun des films à bulles d'air et la couche d'ouate à base de fibres de polyester ;
- la membrane de collage est un film d'un copolymère de l'éthylène, de préférence un film d'éthylène-acétate de vinyle ;
- la couche d'ouate a une épaisseur comprise entre 20 et 60 mm, de préférence entre 25 et 40 mm.

La présente invention se rapporte également à un procédé de fabrication de l'isolant tel que décrit ci-dessus, comportant les étapes suivantes :
- Extrusion du film à bulles d'air et simultanément lamination thermique du film à bulles d'air avec la feuille d'aluminium pour former un laminé ;
- Insertion et collage de l'ouate à base de fibres de polyester entre deux laminés.

Selon des modes particuliers de l'invention, le procédé comporte au moins une ou une combinaison appropriée des caractéristiques suivantes :
- il comprend une étape de placement d'une membrane de collage entre chaque laminé et l'ouate à base de fibres de polyester, ladite membrane étant ensuite chauffée pour assurer le collage ;
- le collage est effectué par pulvérisation d'une colle à base d'éthylène-acétate de vinyle ;
- la feuille d'aluminium est préalablement revêtue sur une face de nitrocellulose ou de polyéthylène et sur l'autre face de polyéthylène basse densité, la face revêtue de polyéthylène basse densité étant en contact avec le film à bulles d'air durant la lamination thermique.

Finalement, la présente invention se rapporte aussi à une utilisation de l'isolant tel que décrit ci-dessus, en sous-toiture, dans un mur, dans une paroi de séparation ou comme pare-vapeur.

### Brève description des figures

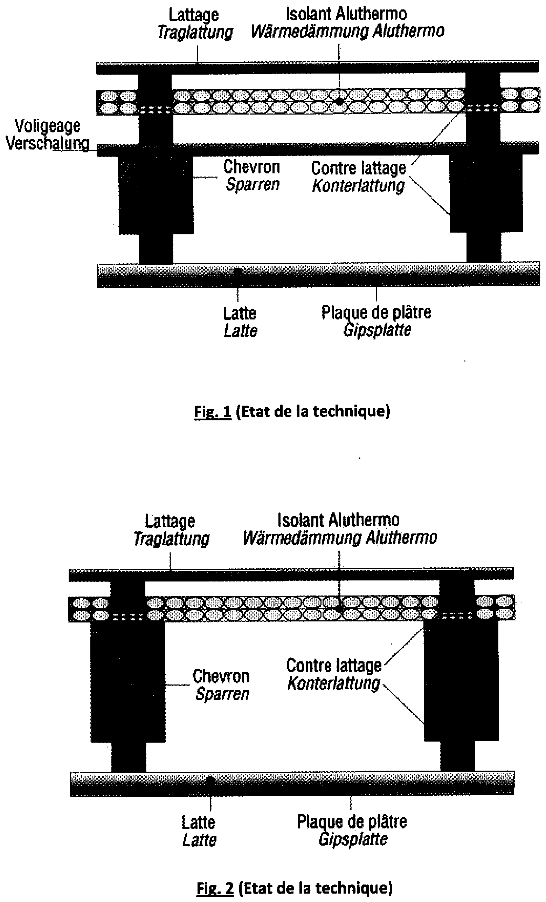

La figure 1 représente, selon l'état de la technique, un isolant de sous-toiture du type film à bulles avec couche d'aluminium. Cet isolant a été placé entre un double contre lattage.

La figure 2 représente, selon l'état de la technique, un isolant de sous-toiture du même type que celui de la figure 1. Cet isolant a été placé avec un simple contre lattage.

La figure 3 représente l'isolant selon l'invention avec sa couche isolante à base d'un non tissé de fibres de polyester prise en sandwich entre deux films à bulles recouverts d'une feuille d'aluminium.

La figure 4 représente la mise en œuvre de l'isolant selon l'invention en sous-toiture.

### Légende

(1) Isolant multicouche
(2) Film à bulles d'air
(3) Feuille d'aluminium
(4) Ouate de polyester
(5) Chevron
(6) Lattage
(7) Contre lattage

### Description détaillée de l'invention

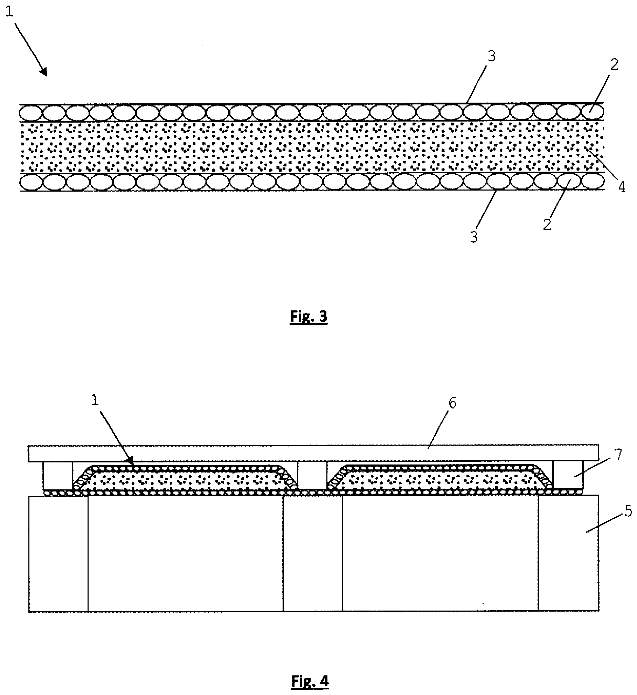

L'isolant 1 selon l'invention comporte trois couches schématisées à la figure 3. Les deux couches extérieures comportent un film à bulles d'air 2 recouvert d'une feuille d'aluminium 3. La feuille d'aluminium 3 est revêtue sur sa face externe d'une couche empêchant l'oxydation de l'aluminium. A titre d'exemple, il peut s'agir d'une couche de nitrocellulose ou de polyéthylène (non représentée). Sur sa face interne, la feuille d'aluminium 3 est revêtue d'une couche de polyéthylène basse densité (non représentée). Cette dernière agit comme une interface entre l'aluminium et le film à bulles lui-même réalisé à partir de polyéthylène basse densité. La couche centrale 4 quant à elle comporte des fibres non tissées à base de polyester. Ces fibres entremêlées peuvent aussi être appelées laine ou ouate de polyester, la caractéristique principale de ce type d'isolant étant sa densité extrêmement faible. Il s'agit en particulier d'une ouate liée thermiquement 100% polyester qui a une masse volumique inférieure à 25 kg/m³, de préférence inférieure à 20 kg/m³, et de manière très préférentielle inférieure à 15 voire à 13 kg/m³, et une épaisseur comprise entre 10 et 60 mm, de préférence entre 20 et 40 mm.

A titre d'exemple, les caractéristiques des différents éléments constitutifs de l'isolant selon l'invention sont reprises ci-dessous.

### Couches extérieures :

- Revêtement de nitrocellulose avec une masse surfacique de 3 g/m² ;
- Feuille d'aluminium avec une épaisseur de 30 µ (98 g/m²) ;
- Revêtement de polyéthylène basse densité avec une épaisseur de 15 µ ;
- Film à bulles avec une épaisseur de 150 µ (138 g/m²), réalisé avec du polyéthylène basse densité ayant une masse volumique de 921 kg/m³, avec des bulles de 4 mm de haut et 10 mm de diamètre, et autoextinguible (Classe B2 suivant DIN 4102).

### Couche centrale :

- Couche de fibres non tissées à base de polyester (polyéthylène téréphtalate) avec une masse volumique d'environ 12 kg/m³ et une épaisseur de 35 mm, résistante au feu (conformément à la norme BS 5852 - source 2), et avec une conductivité thermique de 0.041 W/mK.

l'isolant selon l'invention peut en outre comporter une membrane de collage (non représentée) entre chacune des couches extérieures et la couche centrale. Comme son nom l'indique, cette membrane assure après chauffage le collage des trois couches entre elles. Cette membrane peut être un film d'EVA (éthylène-acétate de vinyle) avec les caractéristiques suivantes :
- film translucide, de couleur blanche ou noire ;
- masse surfacique de 15 à 100 g/m², de préférence de 21 à 95 g/m² ;
- épaisseur de 15 à 105 µm, de préférence de 22 à 100 µm ;
- température de fusion de 70 à 90°C, de préférence de 75 à 85°C ;
- température de ramollissement d'environ 70°C ;
- thermoréactif entre 90 et 200°C.

En appuyant une contre latte de toiture (contre lattage 7) contre l'isolant selon l'invention, on constate à la figure 4 que celui-ci peut être aisément comprimé. Les tests de résistance à la compression détaillés ci-dessous ont montré qu'il peut être comprimé jusqu'à environ 90 %, soit jusqu'à une épaisseur de l'ordre de 3 mm pour un isolant avec une épaisseur initiale de 35 mm.

Les tests de résistance à la compression ont été effectués selon la norme NBN EN 826 sur cinq échantillons similaires de 100 mm de côté et de 37 mm d'épaisseur. A titre illustratif, les résultats sont présentés ci-dessous pour l'isolant avec membrane de collage, les résultats étant similaires pour l'isolant sans membrane de collage. Les échantillons ont été comprimés à une vitesse constante de 3.7 mm/min. jusqu'à une déformation de 80 et 90%. Le tableau 1 représente les charges et contraintes correspondantes pour un taux de compression de 80 et 90%. La charge nécessaire pour comprimer l'échantillon augmente de manière exponentielle avec le taux de compression et atteint des valeurs augmentant drastiquement dans la gamme 80-95%.

**Tableau 1**

| Echantillons N° | - Charge à 80% (N) | Charge à 90% (N) | Dimensions (mm x mm) | Contrainte à 80% (kPa) | Contrainte à 90% (kPa) |
|---|---|---|---|---|---|
| 1 | 555 | 2392 | 100.0 x 104.0 | 53 | 230 |
| 2 | 527 | 2153 | 99.8 x 98.0 | 54 | 220 |
| 3 | 551 | 2136 | 98.6 x 98.6 | 57 | 220 |
| 4 | 640 | 2654 | 100.0 x 100.8 | 63 | 263 |
| 5 | 528 | 2260 | 103.6 x 105.0 | 49 | 208 |
| Moyenne | | | | **55** | **228** |

L'isolant multicouche selon l'invention est réalisé à l'aide d'un procédé comportant deux étapes principales. Dans une première étape, le film à bulles est extrudé et simultanément laminé (lamination thermique) avec la feuille d'aluminium. Cette dernière est préalablement revêtue de la couche contre l'oxydation sur une face et de polyéthylène basse densité sur l'autre face, la face comportant le revêtement de polyéthylène basse densité étant mise en contact avec le film à bulles lors de la amination. Dans une seconde étape, les trois couches sont collées ensemble. Il existe deux variantes pour effectuer le collage.

Selon une première variante, deux rouleaux standards comportant le laminé de la première étape sont déroulés et, à une même vitesse, l'ouate est insérée entre les laminés. Simultanément, un adhésif est pulvérisé sur les films à bulles et les trois couches sont comprimées pour obtenir une bonne adhésion. En parallèle, l'isolant multicouche ainsi obtenu est mis à dimension, la découpe pouvant s'effectuer selon les directions transversale et longitudinale du produit. A titre d'exemple, l'adhésif utilisé peut être une colle à base d'EVA (éthylène-acétate de vinyle) avec une densité de 0,95 et une température d'application de 150-170°C.

Selon une deuxième variante, une membrane de collage telle que décrite précédemment est déroulée dans une lamineuse entre le laminé de la première étape et la couche d'ouate avant d'être chauffée à +/- 100°C pour activer la colle. Ensuite, comme précédemment, l'isolant ainsi obtenu est mis à dimension.

L'isolant selon l'invention a été illustré ci-dessus pour une utilisation en sous-toiture. Il peut cependant être utilisé dans de nombreuses autres applications. On peut citer une utilisation comme pare-vapeur éventuellement en dessous d'un isolant complémentaire. Il peut également être utilisé dans les murs notamment en cas d'une construction à ossature bois ou comme isolant acoustique dans des parois de séparation.

## Revendications

1. Isolant multicouche (1) comportant une couche à base de fibres de polyester (4) prise en sandwich entre deux films à bulles d'air (2), **caractérisé en ce que** ladite couche à base de fibres de polyester est une couche d'ouate (4) ayant une masse volumique inférieure à 25 kg/m³, de préférence inférieure à 20 kg/m³ et **en ce que** ledit isolant multicouche (1) peut être comprimé, en utilisation, jusqu'à une épaisseur égale à environ 10 % de son épaisseur initiale.

2. Isolant (1) selon la revendication 1, dans lequel la couche d'ouate (4) a une masse volumique inférieure à 15 kg/m³, de préférence inférieure à 13 kg/m³.

3. Isolant (1) selon l'une quelconque des revendications précédentes, dans lequel chaque film à bulles d'air (2) est recouvert d'une feuille d'aluminium (3) sur sa face libre.

4. Isolant (1) selon la revendication précédente,
dans lequel la feuille d'aluminium (3) comporte un revêtement de polyéthylène basse densité sur sa face en contact avec le film à bulles d'air (2) et un revêtement de nitrocellulose ou de polyéthylène sur sa face libre.

5. Isolant (1) selon l'une quelconque des revendications précédentes, comportant en outre une membrane de collage entre chacun des films à bulles d'air (2) et la couche d'ouate à base de fibres de polyester (4).

6. Isolant (1) selon la revendication 5, dans lequel la membrane de collage est un film d'un copolymère de l'éthylène, de préférence un film d'éthylène-acétate de vinyle.

7. Isolant (1) selon l'une quelconque des revendications précédentes, dans lequel la couche d'ouate (4) a une épaisseur comprise entre 20 et 60 mm, de préférence entre 25 et 40 mm.

8. Procédé de fabrication d'un isolant (1) selon l'une quelconque des revendications 3 à 7 ledit procédé comportant les étapes suivantes :
- Extrusion du film à bulles d'air (2) et simultanément lamination thermique du film à bulles d'air (2) avec la feuille d'aluminium (3) pour former un laminé;
- Insertion et collage de l'ouate à base de fibres de polyester (4) entre deux laminés.

9. Procédé de fabrication selon la revendication 8, comprenant une étape de placement d'une membrane de collage entre chaque laminé et l'ouate à base de fibres de polyester (4), ladite membrane étant ensuite chauffée pour assurer le collage.

10. Procédé de fabrication selon la revendication 8, dans lequel le collage est effectué par pulvérisation d'une colle à base d'éthylène-acétate de vinyle.

11. Procédé selon l'une quelconque des revendications 8 à 10, dans lequel la feuille d'aluminium (3) est préalablement revêtue sur une face de nitrocellulose ou de polyéthylène et sur l'autre face de polyéthylène basse densité, la face revêtue de polyéthylène basse densité étant en contact avec le film à bulles d'air (2) durant la lamination thermique.

12. Utilisation de l'isolant (1) selon l'une quelconque des revendications 1 à 7, en sous-toiture, dans un mur, dans une paroi de séparation ou comme pare-vapeur.

## Patentansprüche

1. Mehrschichtiges Isolationsmaterial (1), aufweisend eine Schicht auf der Basis von Polyesterfasern (4), die sandwichartig von zwei Luftpolsterfolien (2) eingeschlossen ist, **dadurch gekennzeichnet, dass** die Schicht auf der Basis von Polyesterfasern eine Watteschicht (4) mit einer Volumenmasse unter 25 kg/m³, vorzugsweise unter 20 kg/m³ ist, und dass das mehrschichtige Isolationsmaterial (1) im Gebrauch bis auf eine Dicke komprimierbar ist, die zirka 10 % seiner Ausgangsdicke entspricht.

2. Isolationsmaterial (1) nach Anspruch 1, wobei die Watteschicht (4) eine Volumenmasse unter 15 kg/m³, vorzugsweise unter 13 kg/m³, hat.

3. Isolationsmaterial (1) nach einem der vorangehenden Ansprüche, wobei jede Luftpolsterfolie (2) mit einer Aluminiumfolie (3) auf ihrer freien Fläche bedeckt ist.

4. Isolationsmaterial (1) nach vorangehendem Anspruch, wobei die Aluminiumfolie (3) eine Beschichtung aus Polyethylen niederer Dichter auf ihrer Fläche aufweist, die mit der Luftpolsterfolie (2) in Kontakt ist, und eine Beschichtung aus Nitrocellulose oder Polyethylen auf ihrer freien Fläche.

5. Isolationsmaterial (1) nach einem der vorangehenden Ansprüche, aufweisend ferner eine Klebemembran zwischen jeder der Luftpolsterfolien (2) und der Watteschicht auf der Basis von Polyesterfasern (4).

6. Isolationsmaterial (1) nach Anspruch 5, wobei die Klebemembran eine Folie eines Ethylencopolymers, vorzugsweise eine Ethylen-Vinylacetatfolie, ist.

7. Isolationsmaterial (1) nach einem der vorangehenden Ansprüche, wobei die Watteschicht (4) eine Dicke hat, die zwischen 20 und 60 mm, vorzugsweise zwischen 25 und 40 mm, liegt.

8. Verfahren zur Herstellung eines Isolationsmaterials (1) nach einem der Ansprüche 3 bis 7, wobei das Verfahren die folgenden Schritte umfasst:
- Extrudieren der Luftpolsterfolie (2) und gleichzeitig thermisches Laminieren der Luftpolsterfolie (2) mit der Aluminiumfolie (3), um ein Laminat zu bilden;
- Einfügen und Kleben der Watte auf der Basis von Polyesterfasern (4) zwischen zwei Laminaten.

9. Herstellungsverfahren nach Anspruch 8, umfassend einen Schritt des Platzierens einer Klebemembran zwischen jedem Laminat und der Watte auf der Basis von Polyesterfasern (4), wobei die Membran danach erwärmt wird, um das Kleben zu gewährleisten.

10. Herstellungsverfahren nach Anspruch 8, wobei das Kleben durch Zerstäuben eines Klebers auf der Basis von Ethylen-Vinylacetat durchgeführt wird.

11. Verfahren nach einem der Ansprüche 8 bis 10, wobei die Aluminiumfolie (3) zuvor auf einer Fläche mit Nitrocellulose oder Polyethylen und auf der anderen Fläche mit Polyethylen niederer Dichte beschichtet wird, wobei die mit Polyethylen niederer Dichte beschichtete Fläche während der thermischen Laminierung mit der Luftpolsterfolie (2) in Kontakt ist.

12. Verwendung des Isolationsmaterial (1) nach einem der Ansprüche 1 bis 7 als Unterdach, in einer Mauer, in einer Trennwand oder als Dampfsperre.

## Claims

1. Multilayer insulation (1) comprising a polyester fibre layer (4) sandwiched between two air bubble films (2), **characterized in that** said polyester fibre layer is a blanket layer (4) having a density of less than 25 kg/m³, preferably less than 20 kg/m³, and **in that** said multilayer insulation (1) can be compressed when used to a thickness of about 10 % of its initial thickness.

2. The insulation (1) according to claim 1, wherein the blanket layer (4) has a density of less than 15 kg/m³, preferably less than 13 kg/m³.

3. The insulation (1) according to any of the preceding claims, wherein each air bubble film (2) on the free surface thereof is covered with an aluminium sheet (3).

4. The insulation (1) according to the preceding claim, wherein the aluminium sheet (3) has a coating of low-density polyethylene on its surface in contact with the air bubble film (2) and a coating of nitrocellulose or polyethylene on its free surface.

5. The insulation (1) according to any of the preceding claims, further comprising a bonding membrane between each of the air bubble films (2) and the polyester fibre blanket layer (4).

6. The insulation (1) according to claim 5, wherein the bonding membrane is an ethylene copolymer film, preferably an ethylene-vinyl acetate film.

7. The insulation (1) according to any of the preceding claims, wherein the blanket layer (4) has a thickness of between 20 and 60 mm, preferably between 25 and 40 mm.

8. Process for manufacturing an insulation (1) according to any of claims 3 to 7, said process comprising the following steps:
- Extruding air bubble film (2) and simultaneously thermally laminating the air bubble film (2) with the aluminium sheet (3) to form a laminate;
- Inserting and bonding the polyester fibre blanket (4) between two laminates.

9. The manufacturing process according to claim 8, comprising a step to place a bonding membrane between each laminate and the polyester fibre blanket (4), said membrane then being heated to ensure bonding.

10. The manufacturing process according to claim 8, wherein bonding is performed by spraying an ethylene-vinyl acetate glue.

11. The process according to any of claims 8 to 10, wherein the aluminium sheet (3) is previously coated on one surface with nitrocellulose or polyethylene and on the other surface with low-density polyethylene, the surface coated with low-density polyethylene being in contact with the air bubble film (2) during thermal lamination.

12. Use of the insulation (1) according to any of claims 1 to 7, on roof decking, in a wall, a partitioning wall, or as vapour barrier.
